# EUROPÄISCHE PATENTSCHRIFT

(11) **EP 3 266 811 B1**
(45) Veröffentlichungstag und Bekanntmachung des Hinweises auf die Patenterteilung: **25.09.2019**
(21) Anmeldenummer: 16001511.1
(22) Anmeldetag: 07.07.2016
(51) Int. Cl.: C08J 7/04

(54) **FÄRBIG LACKIERTE FOLIEN MIT ERHÖHTER UV-STABILITÄT**
PAINTED FILMS WITH HIGH UV STABILITY
FEUILLES LAQUEES EN COULEUR AYANT UNE STABILITE ELEVEE AUX UV

(43) Veröffentlichungstag der Anmeldung: 10.01.2018
(73) Patentinhaber: Hueck Folien Gesellschaft m.b.H., 4342 Baumgartenberg (AT)
(72) Erfinder: Keplinger, Jürgen, 4351 Saxen (AT); Lindmeir, Thomas, 4224 Wartberg ob der Aist (AT)
(74) Vertreter: KLIMENT & HENHAPEL

(56) Entgegenhaltungen:
- EP-A1- 1 688 248
- EP-A1- 1 785 268
- DE-A1-102005 025 233

## Beschreibung

Die Erfindung betrifft färbig lackierte Folien mit erhöhter UV-Stabilität, die als Dekorfolien sowohl im Innen- als auch im Außenbereich, auch für Langzeitanwendungen einsetzbar sind.

Für die Herstellung von UV-beständigen färbig lackierten Dekorfolien werden im Wesentlichen UV-stabile Pigmente in den entsprechenden Lacken verwendet. Häufig eingesetzte UV-stabile Pigmente sind beispielsweise Pigmente auf Basis von Ruß oder Titandioxid. Die Pigmente werden in ein Bindemittel eingebracht und auf ein Trägersubstrat, im Allgemeinen eine Kunststofffolie als Lackbeschichtung aufgebracht.Allerdings zeigen sich aufgrund der Partikelgröße der Pigmente, deren Benetzungsverhalten, Agglomerationsneigung und elektrostatischer Aufladung etc. immer Defekte in der färbigen Lackschicht, wie beispielsweise ungleichmäßiger Farbverlauf. In Kombination mit UV-Glanzlackierungen und einer ggf. vorhandenen Metallisierung zur Erzielung eines spiegelnden Effekts sind diese Defekte dann deutlich erkennbar. Lösliche Farbstoffe unter Einsatz von Metallkomplexen weisen aufgrund ihrer guten Löslichkeit in bekannten üblichen Lacksystemen, wie Polyurethanen, Polyvinylchloriden, Polyethylenterephthalat und vielen Acrylaten sehr gute Lackierqualitäten auf.

Es werden problemlos Lackverläufe ohne Störungen und/oder Fehlstellen in der Beschichtung erreicht. Auch in Verbindung mit Glanzlackierungen und/oder metallisierten Schichten zur Erzielung eines spiegelnden Effekts sind diese Beschichtungen fehlerfrei ohne Defekte wahrnehmbar.

DE 102005025233 A1 offenbart ein weiß-opake Folie mit niedriger Transparenz, verbesserter Durchschlagsfestigkeit und zusätzlicher Funktionalität. Die Folie weist dabei einen kristallisierbaren Thermoplast, Bariumsulfat und Titanoxid und mindestens einen optischen Aufheller und einen im Thermoplast lösbaren Farbstoff auf.

Speziell im Innenbereich, beispielsweise für Möbelfolien, werden hohe Anforderungen an die UV-Stabilität der färbig lackierten Folien gestellt.

Insbesondere dürfen derartige Folien auch unter Sonneneinstrahlung nicht ausbleichen oder farblich verändert werden.

Aufgabe der vorliegenden Erfindung war es UV-stabile färbig lackierte Folien bereitzustellen, die auch in Verbindung mit UV-Glanzlackierungen und/oder metallischen Schichten defektfreie farbige Beschichtungen ohne Fehlstellen oder Defekte aufweisen. Insbesondere soll ein ungleichmäßiger Farbverlauf verhindert werden.

Gegenstand der Erfindung sind daher UV- stabile färbig lackierte Dekorfolien zur Anwendung im Innen- und Außenbereich mit hoher UV-Stabilität umfassend ein Trägersubstrat und eine farbige Beschichtung, dadurch gekennzeichnet, dass das Trägersubstrat eine UV-stabilisierte Polyethylenterephthalatfolie ist, auf die auf einer Oberfläche eine Beschichtung bestehend aus in einem organischen Lösungsmittel oder in Wasser löslichen Farbstoffen aus Metallkomplexen oder aus Diazofarbstoffen in einem geeigneten Lösungsmittel und einem Bindemittel als Lack durch Druckverfahren aufgebracht ist.

Unter UV-Stabilität wird hier verstanden, dass die farbige Schicht unter der Einwirkung von UV-Strahlung nicht ausblasst.

Erfindungsgemäß werden also die Vorteile löslicher Farbstoffe zur Herstellung von defektfreien Beschichtungen ohne Fehlstellen genutzt und gleichzeitig der Nachteil diese Farbstoffe, nämlich die mangelnde UV-Stabilität durch den Einsatz geeigneter Trägersubstrate kompensiert.

Als Trägersubstrat werden UV-stabilisierte Polyethylentherephthalatfolien (PET), beispielsweise Lumirror® U65V, U6W, U6W1, U6W3, QX44 Hostaphan® RUVK- und GUV-Reihe eingesetzt.

Je nach Verwendungszweck weisen diese Folien eine Dicke von etwa 12 bis 190 µm, bevorzugt 12 bis 100 µm auf.

Gegebenenfalls kann das Trägersubstrat auf einer ersten Oberfläche mit einer strahlungshärtbaren transluzenten oder transparenten Lackbeschichtung versehen sein, die matt, glänzend oder hochglänzend sein kann. In einer besonderen Ausführungsform kann die strahlungshärtbare Lackbeschichtung partiell mattiert sein, beispielsweise durch Behandlung mit einem Excimer.

Ein geeignetes Verfahren zur partiellen Mattierung der Lackschicht ist beispielsweise in EP-A 2 418 019 offenbart.

Geeignet zur Herstellung der strahlungshärtbaren Lackbeschichtung sind beispielsweise UV-Lacke auf Basis von modifizierten Acrylaten (Polyesteracrylate, Polyetheracrylate, PU-Acrylate).

Auf die zweite Oberfläche des Trägersubstrats wird eine Schicht aus einem löslichen Farbstoff auf Basis von Metallkomplexen oder Diazofarbstoffen aufgebracht. Der lösliche Farbstoff liegt in einem geeigneten Lösungsmittel, und einem Bindemittel, wie beispielweise in Polyvinylchlorid, Polyestern, Acrylaten oder Polyurethanen vor und wird in einem Bindemittel als Lack durch Druckverfahren, wie Tiefdruck, Flexodruck, Siebdruck, Digitaldruck, durch Walzenauftragsverfahren, Aufstreichen, Aufsprühen und dergleichen aufgebracht.

Beispiele an in organischen Lösungsmitteln löslichen Farbstoffen sind beispielsweise Orasole® wie z.B.Yellow 157 (1:2 Chromkomplex), Blau GL (Kupferphthalocyanin-Komplex), Red 335 (1:1 Chromkomplex), Black RLI (Chromkomplex), Orange RG (1:2 Chromkomplex). Darüberhinaus können auch wasserlösliche Farbstoffe (Diazofarbstoffe) wie z.B. Bayscript® Cyan BA, Gelb BR, Magenta BB, Schwarz SP eingesetzt werden.

Die Lackschicht kann einfarbig ausgeführt sein, es können jedoch auch mehrfarbige Dekordrucke unter Verwendung der löslichen Farbstoffe hergestellt werden.

In einer bevorzugten Ausführungsform kann die lackierte Dekorfolie mit einer Metallisierung versehen oder mit einer metallisierten oder metallischen Folie kaschiert werden. Dadurch können hochglänzende Folien mit Spiegeleffekt erzeugt werden.

Die Metallisierung kann dabei mittels eines PVD- oder CVD- Verfahrens, etwa durch Sputtern oder thermisches Verdampfen direkt auf die Lackschicht aufgebracht werden.

Alternativ kann die mit der Lackschicht versehene Folie mittels eines Kaschierklebers mit einer, eine metallische Schicht aufweisenden, Trägerfolie kaschiert werden. Als Trägerfolie kommen dabei flexible Kunststofffolien beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PTFE (Polytetra-fluorethylen), PVF (Polyvinylfluorid), PVDF (Polyvinylidenfluorid), und EFEP (Ethylen-Tetrafluorethylen-Hexafluorpropylen-Fluorterpolymer) in Frage.

Diese Ausführungsform ist besonders für die Herstellung temperaturstabiler Dekorfolien geeignet.

Die Trägerfolien weisen vorzugsweise eine Dicke von 5 - 700 µm, bevorzugt 5 - 200 µm, besonders bevorzugt 5 - 50 µm auf.

Auf diese Trägerfolie wird eine metallische Schicht beispielsweise durch ein PVD- oder CVD-Verfahren, etwa durch Sputtern oder thermisches Verdampfen aufgebracht.

Als metallische Schichten kommen jeweils beispielsweise Schichten aus Al, Cr, Ag, Au, Cu, Pd, Pt, Ti oder Legierungen wie beispielsweise Cu/Al Legierungen in Frage.

In einer weiteren alternativen Ausführungsform kann die metallische Schicht auch durch Drucken einer metallpigmenthaltigen Druckfarbe erzeugt werden, wobei hier wiederum entweder direkt auf die Lackschicht gedruckt werden kann oder eine mit dieser metallpigmenthaltigen Druckfarbe bedruckte Trägerfolie auf die Lackschicht kaschiert werden kann.

Die jeweiligen metallischen Schichten können vollflächig oder partiell aufgebracht sein.

Durch die reflektierende metallische Schicht entsteht ein spiegelnder Effekt.

In einer weiteren Ausführungsform kann die färbig lackierte Dekorfolie auf der, die Lackschicht und ggf. eine metallische Schicht aufweisenden Oberfläche mit einer Schutzlackschicht versehen sein.

Weiters kann die Dekorfolie anschließend mit einer Heißsiegellackbeschichtung versehen werden, mit deren Hilfe die erfindungsgemäßen Folien auf dickere Substrate wie beispielsweise ABS-, PS-, PMMA-Platten von 0,3 - 3,0 mm Dicke, laminiert werden kann.

Die erfindungsgemäßen UV-stabilen färbig lackierten Folien werden insbesondere als Möbelfolien und Dekorfolien im Innenbereich, aber auch als Dekorfolien im Innen- und Außenbereich verwendet. Insbesondere können die erfindungsgemäßen Folien als hochwertige Spiegelfolien eingesetzt werden.

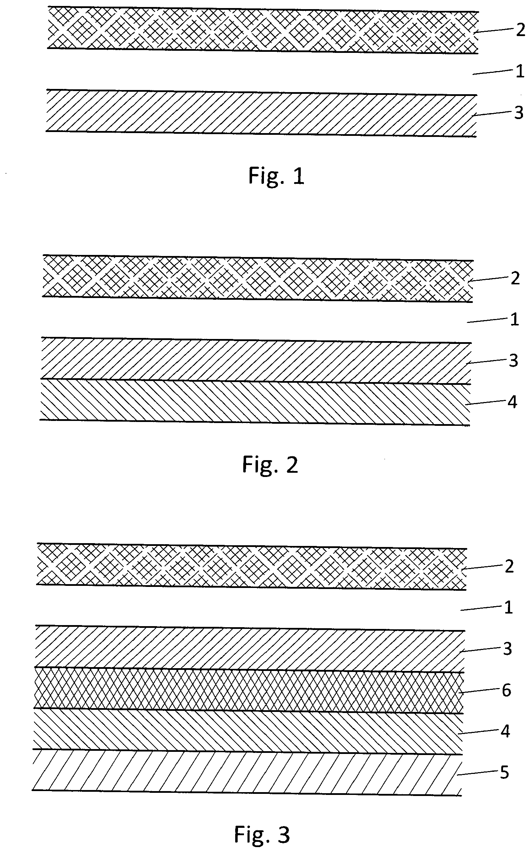

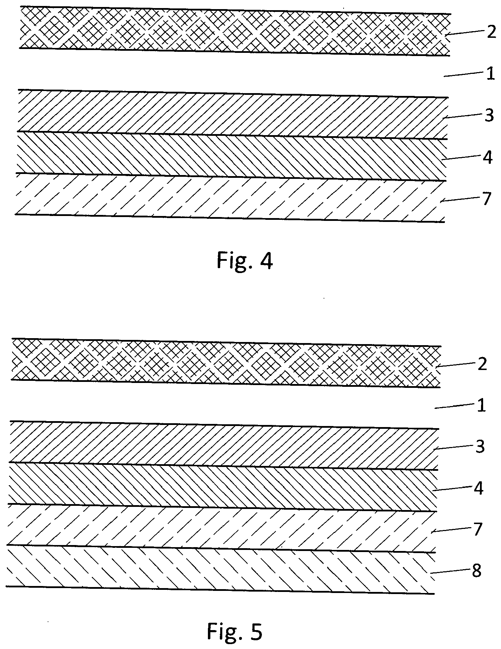

In den Figuren 1 bis 5 sind erfindungsgemäße Dekorfolien dargestellt.

Darin bedeuten
- 1: das UV-stabilisierte Trägersubstrat
- 2: eine UV-härtbare Lackschicht
- 3: eine Lackschicht aus in einem Lösungsmittel löslichen Farbstoffen
- 4: eine metallische Schicht
- 5: ein weiteres Trägersubstrat
- 6: eine Kaschierklebeschicht
- 7: eine Schutzlackschicht
- 8: eine Heißsiegelklebeschicht

In Figur 1 ist der Grundaufbau einer erfindungsgemäßen Dekorfolie dargestellt. Das UV-stabilisierte Trägersubstrat 1 ist auf einer Oberfläche mit einer UVhärtbaren Lackschicht 2 und auf der gegenüberliegenden Oberfläche mit einer Lackschicht 3, die in einem Lösungsmittel lösliche Farbstoffe aufweist versehen.

In Figur 2 ist die Dekorfolie aus Figur 1 auf der Lackschicht 3 zusätzlich mit einer metallischen Schicht 4 versehen. Dadurch entsteht bei der Betrachtung durch das Trägersubstrat 1 hindurch ein spiegelnder Effekt.

In Figur 3 ist eine Dekorfolie dargestellt, bei der die Dekorfolie aus Figur 1 über eine Kaschierklebeschicht 6 mit einem Trägersubstrat 5 verbunden ist, das mit einer metallischen Schicht 4 versehen ist. Auch dabei entsteht bei der Betrachtung durch das Trägersubstrat 1 hindurch ein spiegelnder Effekt.

In Figur 4 weist die in Figur 2 dargestellt Dekorfolie auf der metallischen Schicht 4 eine Schutzlackschicht 7 zum Schutz der metallischen Schicht 4 auf.

In Figur 5 ist die in Figur 4 dargestellt Dekorfolie mit einer Heißsiegelklebeschicht versehen, mit der die Dekorfolie auf ein dickeres Substrat wie beispielsweise ABS-, PS-, PMMA-Platten von 0,3 - 3,0 mm Dicke, laminiert werden kann.

### Beispiel 1:

Die Prüfung der Lichtechtheit im Innenbereich erfolgte in Anlehnung an EN 438-2: 2005 mit Schnellbelichtungsgerät SUNTEST CPS +. Die Bewertung erfolgt nach Blaumaßstab DIN EN 105-B02. Nach Erreichen der Stufe 6 am Blaumaßstab entspricht der Kontrast der Prüfmuster folgendem Ergebnis:
Erreichte Stufe vom Graumaßstab

**1.) UV-Lack**

| | |
|---|---|
| Farbschicht mit lösl. Farbstoff Orasole® Yellow 157 | |
| PET-Folie 50 µm: | 1 |

**2.) UV-Lack**

| | |
|---|---|
| PET-Folie UV-stab Lumirror® U65V, 50µm | |
| Farbschicht mit lösl. Farbstoff Orasole® Yellow 157 | 4 |

## Patentansprüche

1. UV- stabile färbig lackierte Dekorfolien zur Anwendung im Innen- und Außenbereich mit hoher UV-Stabilität umfassend ein Trägersubstrat und eine farbige Beschichtung, **dadurch gekennzeichnet, dass** das Trägersubstrat eine UV-stabilisierte Polyethylenterephthalatfolie ist, auf die auf einer Oberfläche eine Beschichtung bestehend aus in einem organischen Lösungsmittel oder in Wasser löslichen Farbstoffen aus Metallkomplexen oder aus Diazofarbstoffen in einem geeigneten Lösungsmittel und einem Bindemittel als Lack durch Druckverfahren aufgebracht ist.

2. Dekorfolien nach Anspruch 1, **dadurch gekennzeichnet, dass** das Trägersubstrat auf der, der Beschichtung aus löslichen Farbstoffen gegenüberliegenden Oberfläche mit einer strahlungshärtbaren Lackschicht versehen ist.

3. Dekorfolie nach einem der Ansprüche 1 bis 2, **dadurch gekennzeichnet, dass** sie auf der die Beschichtung aus löslichen Farbstoffen tragenden Oberfläche gegen ein weiteres Trägersubstrat kaschiert ist.

4. Dekorfolie nach Anspruch 3, **dadurch gekennzeichnet, dass** das weitere Trägersubstrat mit einer metallischen Schicht versehen ist, wobei die metallische Schicht der Beschichtung aus löslichen Farbstoffen zugewandt ist.

5. Dekorfolie nach einem der Ansprüche 1 oder 2, **dadurch gekennzeichnet, dass** die Beschichtung aus löslichen Farbstoffen mit einer metallischen Schicht versehen ist.

6. Dekorfolie nach einem der Ansprüche 1 bis 2, **dadurch gekennzeichnet, dass** die Beschichtung aus löslichen Farbstoffen mit einer Druckschicht aus einer metallpigmenthaltigen Druckfarbe versehen ist.

7. Dekorfolie nach einem der Ansprüche 1 bis 6, **dadurch gekennzeichnet, dass** die metallische Beschichtung, die metallische Schicht oder die Druckschicht aus einer metallpigmenthaltigen Druckfarbe vollflächig oder partiell aufgebracht ist.

8. Dekorfolie nach einem der Ansprüche 1 bis 7, **dadurch gekennzeichnet, dass** die Beschichtung aus löslichen Farbstoffen einfarbig oder mehrfarbig ausgeführt ist.

9. Dekorfolie nach einem der Ansprüche 1 bis 8, **dadurch gekennzeichnet, dass** auf der metallischen Beschichtung, metallischen Schicht oder der Druckschicht aus einer metallpigmenthaltigen Druckfarbe eine Schutzlackschicht und/oder eine Heißsiegelklebebeschichtung aufgebracht ist.

10. Verwendung der Dekorfolie nach einem der Ansprüche 1 bis 9 als Möbelfolien im Innenbereich und als Dekorfolien im Innen- und Außenbereich.

## Claims

1. UV-stable, color-coated decorative films for use indoors and outdoors with high UV stability, comprising a carrier substrate and a colored coating, **characterized in that** the carrier substrate is a UV-stabilized polyethylene terephthalate film to which a coating consisting of dyes of metal complexes which are soluble in an organic solvent or in water or of diazo dyes in a suitable solvent and a binder as lacquer is applied to a surface by printing processes.

2. Decorative films according to claim 1, **characterized in that** the carrier substrate is provided with a radiation-curable lacquer layer on the surface opposite the coating of soluble dyes.

3. Decorative film according to one of claims 1 to 2, **characterized in that** it is laminated on the surface carrying the coating of soluble dyes against a further carrier substrate.

4. Decorative film according to claim 3, **characterized in that** the further carrier substrate is provided with a metallic layer, wherein the metallic layer faces the coating of soluble dyes.

5. Decorative film according to one of claims 1 or 2, **characterized in that** the coating of soluble dyes is provided with a metallic layer.

6. Decorative film according to one of claims 1 to 2, **characterized in that** the coating of soluble dyes is provided with a printing layer of a metal pigment-containing printing ink.

7. Decorative film according to one of claims 1 to 6, **characterized in that** the metallic coating, the metallic layer or the printing layer is applied completely or partially from a metallic pigment-containing printing ink.

8. Decorative film according to one of claims 1 to 7, **characterized in that** the coating is made of soluble dyes in one or more colors.

9. Decorative film according to one of claims 1 to 8, **characterized in that** a protective lacquer layer and/or a heat-seal adhesive coating is applied to the metallic coating, metallic layer or the printing layer of a metallic pigment-containing printing ink.

10. Use of the decorative film according to one of the claims 1 to 9 as furniture films indoors and as decorative films indoors and outdoors.

## Revendications

1. Feuilles décoratives peintes de couleurs stables aux UV pour l'intérieur et l'extérieur, à grande stabilité aux UV, comprenant un substrat de support et un revêtement de couleur, **caractérisées en ce que** le substrat de support est une feuille de téréphtalate de polyéthylène stabilisée aux UV sur laquelle est appliqué sur une surface, par des procédés d'impression, un revêtement composé de colorants solubles dans un solvant organique ou dans l'eau, composés de complexes de métaux ou de colorants diazoïques dans un solvant approprié, et d'un liant prenant la forme d'un vernis.

2. Feuilles décoratives selon la revendication 1, **caractérisées en ce que** le substrat de support est muni, sur la face opposée au revêtement composé de colorants solubles, d'une couche de vernis durcissable sous l'effet d'un rayonnement.

3. Feuille décorative selon l'une des revendications 1 à 2, **caractérisée en ce qu'**elle est contrecollée contre un autre substrat de support sur la surface portant le revêtement composé de colorants solubles.

4. Feuille décorative selon la revendication 3, **caractérisée en ce que** l'autre substrat de support est muni d'une couche métallique, laquelle couche métallique est tournée vers le revêtement composé de colorants solubles.

5. Feuille décorative selon l'une des revendications 1 ou 2, **caractérisée en ce que** le revêtement composé de colorants solubles est muni d'une couche métallique.

6. Feuille décorative selon l'une des revendications 1 à 2, **caractérisée en ce que** le revêtement composé de colorants solubles est muni d'une couche d'impression composée d'une encre d'imprimerie contenant des pigments métalliques.

7. Feuille décorative selon l'une des revendications 1 à 6, **caractérisée en ce que** le revêtement métallique, la couche métallique ou la couche d'impression composée d'une encre d'imprimerie contenant des pigments métalliques est appliquée sur toute la surface ou une partie.

8. Feuille décorative selon l'une des revendications 1 à 7, **caractérisée en ce que** le revêtement composé de colorants solubles est réalisé d'une couleur ou de plusieurs couleurs.

9. Feuille décorative selon l'une des revendications 1 à 8, **caractérisée en ce qu'**une couche de vernis protecteur et/ou un revêtement colle thermoscellable sont appliqués sur le revêtement métallique, la couche métallique ou la couche d'impression composée d'une encre d'imprimerie contenant des pigments métalliques.

10. Utilisation de la feuille décorative selon l'une des revendications 1 à 9 comme feuilles pour des meubles à l'intérieur ou comme feuilles décoratives pour l'intérieur et l'extérieur.
